# EUROPÄISCHE PATENTSCHRIFT

(11) **EP 2 072 331 B1**
(45) Veröffentlichungstag und Bekanntmachung des Hinweises auf die Patenterteilung: **11.02.2015**
(21) Anmeldenummer: 08019451.7
(22) Anmeldetag: 06.11.2008
(51) Int. Cl.: B60Q 1/00, B60Q 1/04

(54) **Befestigungsvorrichtung für eine Leuchteinheit und Verfahren zum Leuchtmittelwechsel**
Fixing device for a lighting unit and method of exchanging the bulb
Dispositif de fixation pour une unité d'éclairage et procédé de changement de moyen d'éclairage

(30) Priorität: 20.12.2007 DE 102007062434
(43) Veröffentlichungstag der Anmeldung: 24.06.2009
(73) Patentinhaber: Hella KGaA Hueck & Co., 59552 Lippstadt (DE); Hella Autotechnik spol. s.r.o., 78985 Mohelnice (CZ)
(72) Erfinder: Formánek, Jan, Dipl.-Ing., 78985 Mohelnice (CZ); Hilsenbeck, Thomas, Dipl.-Ing., 59597 Erwitte (DE); Vogt, Boleslav, Dipl.-Ing., 78391 Unicov (CZ); Silberský, Josef, Dipl.-Ing., 57101 Moravská Trebová (CZ)
(74) Vertreter: Ostermann, Thomas

(56) Entgegenhaltungen:
- EP-A- 1 103 417
- EP-A- 1 231 107
- EP-A1- 0 649 773
- FR-A1- 2 833 661
- JP-A- 6 107 060
- US-A- 5 428 511

## Beschreibung

Die Erfindung betrifft eine Befestigungsvorrichtung für eine Leuchteinheit an einer Karosserieöffnung eines Fahr- zeugs nach dem Oberbegriff des Patentanspruchs 1.

Aus der DE 41 33 002 C3 ist eine Befestigungsvorrichtung für eine Leuchteinheit bekannt, mittels derer die Leuchteinheit in einer Karosserieöffnung eines Kraftfahrzeug befestigbar ist. Die Befestigungsvorrichtung umfasst zum einen Führungsmittel, so dass ein Gehäuse der Leuchteinheit nach Ansetzen desselben an einen Öffnungsrand der Karosse- rieöffnung entlang einer translatorischen Führungsbahn in eine Endstellung innerhalb der Karosserieöffnung bewegbar ist. Ferner umfasst die Befestigungsvorrichtung Verriege- lungsmittel, so dass das Gehäuse der Leuchteinheit in der Endstellung rastend gehalten ist. Nachteilig an der be- kannten Befestigungsvorrichtung ist, dass zur Demontage der Leuchteinheit die Verriegelungsmittel durch ein Werk- zeug unter Aufwendung einer Kraft betätigt werden müssen.

Aus der DE 197 41 522 C2 ist eine Befestigungsvorrichtung für Leuchteinheiten bekannt, mittels derer Leuchteinheiten in eine Karosserieöffnung eines Fahrzeugs eingesetzt bzw. wieder entfernt werden können. Die Befestigungsvorrichtung weist als Führungsmittel eine Führungskulisse auf, die an einer die Leuchteinheit aufnehmenden Aufnahmeeinrichtung angeformt ist. Die Führungskulisse weist zwei rechtwinklig ineinander übergehende Streckenabschnitte auf, so dass die Leuchteinheit unter Eingreifen eines Zapfens in die Nut der Führungskulisse aus einer äußeren Einschubstellung, in der die Leuchteinheit im Wesentlichen vor der Karosserieöffnung angeordnet ist, in eine innere Endstellung verbracht wird. In der inneren Endstellung der Leuchteinheit wird diese durch ein als Befestigungsschraube ausgebildetes Verriegelungsmittel an einem Flansch der Aufnahmeinrichtung befestigt. Nachteilig an der bekannten Befestigungsvorrichtung ist, dass der Wechsel eines Leuchtmittels der Leuchteinheit nur unter Zuhilfenahme eines Werkzeuges möglich ist und somit der Leuchtmittelwechsel relativ aufwändig ist.

Aus der US 5 428 511 A ist ein Schieber zum Verklemmen einer Leuchteinheit an einer Aufnahmeeinrichtung bekannt. Der Schieber ist in einem Klemmelement klemmend verschiebbar gelagert und wirkt mit einem Zapfen der Leuchteinheit zusammen.

Aus der EP 1 103 417 A1 ist eine Befestigungsvorrichtung für eine Leuchteinheit bekannt, bei der eine Kippbewegung mit einer Translations- und Drehbewegungskomponente erzeugt wird. Zum Verbringen der Leuchteinheit aus einer Verriegelungs- in eine Entriegelungsstellung ist eine Bolzenverbindung vorgesehen.

Aus der EP 1 231 107 A1 ist eine Befestigungsvorrichtung für eine Leuchteinheit mit einer Aufnahmeeinheit bekannt, in der eine Kippeinheit integriert angeordnet ist. Mittels der Kippeinheit kann die Leuchteinheit unter Freilegung einer Rückseite derselben in eine geneigte Endstellung verbracht werden. Durch Betätigen eines Verriegelungszapfens in einer Drehrichtung, der ein Lösen von Nocken aus Langlöchern der Aufnahmeeinrichtung bewirkt, und durch Entriegeln von elastischen Klammern kann die Leuchteinheit entlang einer Rutsche verschoben werden, so dass sie durch nachfolgendes Kippen in eine äußere Endstellung verbringbar ist. Das Verkippen wird im Wesentlichen dadurch bewirkt, dass zwischen der Leuchteinheit und der Aufnahmeeinheit eine Scharnierverbindung vorgesehen ist. Das Entriegeln der Leuchteinheit erfolgt somit in zwei Schritten und ist relativ aufwändig.

Aus der EP 0 649 773 A1 ist eine Befestigungsvorrichtung für Leuchteinheiten bekannt, wobei die Leuchteinheiten rückseitig eine Mehrzahl von Befestigungsstiften aufweisen. Die Befestigungsstifte werden in der Verriegelungsstellung in eine Aufnahmeinrichtung eingesteckt, wobei sie mittels einer mit Langlöchern versehenen Verriegelungsplatte, die auf einer der Leuchteinheit abgewandten Seite der Aufnahmeeinrichtung angesetzt wird, zwischen einer in Folge von Querverschiebung der Verriegelungsplatte in eine Verriegelungs- und Entriegelungsstellung bringbar ist. In der Entriegelungsstellung ist die Leuchteinheit von der Aufnahmeeinrichtung entfernbar. Eine zusätzliche Verkippung der Leuchteinheit ist nicht vorgesehen.

Aus der FR 2 833 661 A ist eine Befestigungsvorrichtung für eine Leuchteinheit bekannt, bei der zur Verriegelung der Leuchteinheit ein Klammerelement mit einem durch eine Bohrung einer Aufnahmeeinrichtung gesteckten Stift zusammenwirkt. Das Klammerelement weist einen Kopf auf, der rastend ein Ende des Stiftes hintergreift. Eine geführte Bewegung der Leuchteinheit in eine Entriegelungsstellung ist nicht vorgesehen.

Aufgabe der vorliegenden Erfindung ist es, eine Befestigungsvorrichtung für eine Leuchteinheit derart weiterzubilden, dass die Montage und Demontage der Leuchteinheit zum Leuchtmittelwechsel vereinfacht wird, ohne dass die Zuhilfenahme eines Werkzeugs erforderlich ist.

Zur Lösung dieser Aufgabe weist die erfindungsgemäße Befestigungsvorrichtung die Merkmale des Patentanspruchs 1 auf.

Der besondere Vorteil der Erfindung besteht darin, dass durch die in der Aufnahmeeinrichtung integrierte Kippeinheit die Leuchteinheit zum Leuchtmittelwechsel nicht komplett von der Aufnahmeeinrichtung entfernt werden muss. Stattdessen ist die Leuchteinheit in einer äußeren Endstellung in einer Kippstellung angeordnet, in der eine Rückseite der Leuchteinheit zum Wechsel des Leuchtmittels zugänglich ist. Vorteilhaft ist somit keine vollständige Demontage der Leuchteinheit zum Wechsel des Leuchtmittels nicht erforderlich. Der Leuchtmittelwechsel kann somit relativ schnell und bedienungsfreundlich erfolgen. Nach der Erfindung ist die Kippeinheit durch ein Scharniereinheit gebildet, wobei ein Scharnierelement der Leuchteinheit mit einem Scharnierelement der Aufnahmeeinrichtung zusammenwirkt, so dass die Leuchteinheit nach translatorischem Herausbewegen aus der Aufnahmemulde in eine Zwischenstellung bringbar ist, in der die Scharnierelement ineinandergreifen und ein Verschwenken der Leuchteinheit ermöglichen. Die Scharnierelemente sind derart ausgelegt, dass die Leuchteinheit unter Bildung eines spitzen Winkels zwischen einer Längsachse der Leuchteinheit und einer Längsachse der Aufnahmemulde verschwenkt und in der äußeren Endstellung selbsttragend gehalten ist.

Nach einer Weiterbildung der Erfindung sind die Scharnierelemente der Leuchteinheit einerseits und der Aufnahmeeinrichtung andererseits in der inneren Endstellung beabstandet zueinander angeordnet. Die Scharniereinheit wird somit erst wirksam, wenn die Leuchteinheit um einen Verschiebeweg aus der Aufnahmemulde herausbewegt worden ist. Da nun ein vorderer Bereich der Leuchteinheit außerhalb der Karosserieöffnung angeordnet ist, kann somit der Schwenkvorgang erfolgen, ohne dass Wandungsteile der Aufnahmemulde im Weg stehen.

Nach einer Weiterbildung der Erfindung sind das Scharnierelement der Leuchteinheit einerseits und der Aufnahmeeinrichtung andererseits komplementär zueinander ausgebildet. Vorzugsweise ist das Scharnierelement der Leuchteinheit gabelförmig ausgebildet, das das zylinderförmig ausgebildete Scharnierelement der Aufnahmeeinrichtung in der Scharnierstellung umgreift.

Nach einer Weiterbildung der Erfindung sind die Verriegelungsmittel durch eine Schiebe-/Rasteinheit gebildet, die an einer Rückseite der Aufnahmeeinrichtung angeordnet ist. In Verbindung mit einem rückseitig der Leuchteinheit angeordneten abragenden Zapfen kann somit die Leuchteinheit ohne Zuhilfenahme von Werkzeug von einer Entriegelungsstellung in eine Verriegelungsstellung und vice versa verbracht werden. Da der Schieber in einem Winkel zu der Fahrzeuglängsachse, vorzugsweise senkrecht zur Fahrzeuglängsachse, verschiebbar gelagert ist, kann der Schieber bedienungsfreundlich betätigt werden. Er weist vorzugsweise ein federndes Klemmelement auf, das in der Verriegelungsstellung rastend mit den Zapfen der Leuchteinheit verbunden ist. Hierdurch ist eine sichere Fixierung der Leuchteinheit in der inneren Endstellung gegeben.

Nach einer weiterbildung der Erfindung wirkt der Schieber mit einem Festlegelement der Aufnahmeinrichtung zusammen, so dass das Klemmelement in der Entriegelungsstellung klemmend fixierbar ist. Auf diese Weise kann der Schieber vorteilhaft in einer die Leuchteinheit freigebenden Stellung gehalten werden, so dass zum Leuchtmittelwechsel die Leuchteinheit unter Freilegung des Zapfens in die innere Endstellung bzw. aus der inneren Endstellung bewegbar ist. Die Ausschubbewegung der Leuchteinheit kann somit unabhängig von der Querbewegung des Schiebers erfolgen.

Weitere Vorteile ergeben sich aus den weiteren Unteransprüchen.

Ein Ausführungsbeispiel der Erfindung wird nachfolgend anhand der Zeichnungen näher erläutert.

Es zeigen:
- Figur 1: eine Rückansicht einer Aufnahmeeinrichtung (Frontendmodul) mit einer Aufnahmemulde zur Aufnahme einer Leuchteinheit in einer Verriegelungsstellung eines Schiebers,
- Figur 2: eine Rückansicht einer Aufnahmeeinrichtung (Frontendmodul) mit einer Aufnahmemulde zur Aufnahme einer Leuchteinheit in einer Entriegelungsstellung des Schiebers,
- Figur 3a: eine teilweise vergrößerte Detailansicht X des Schiebers in der Verriegelungsstellung,
- Figur 3b: eine teilweise vergrößerte Detailansicht X des Schiebers in einer Entriegelungsstellung,
- Figur 4a: eine teilweise Detaildarstellung Y des Schiebers im Bereich eines Festlegelementes in Klemmstellung desselben,
- Figur 4b: eine teilweise Detaildarstellung Y des Schiebers im Bereich einer Festlegelementes in Nichtklemmstellung desselben,

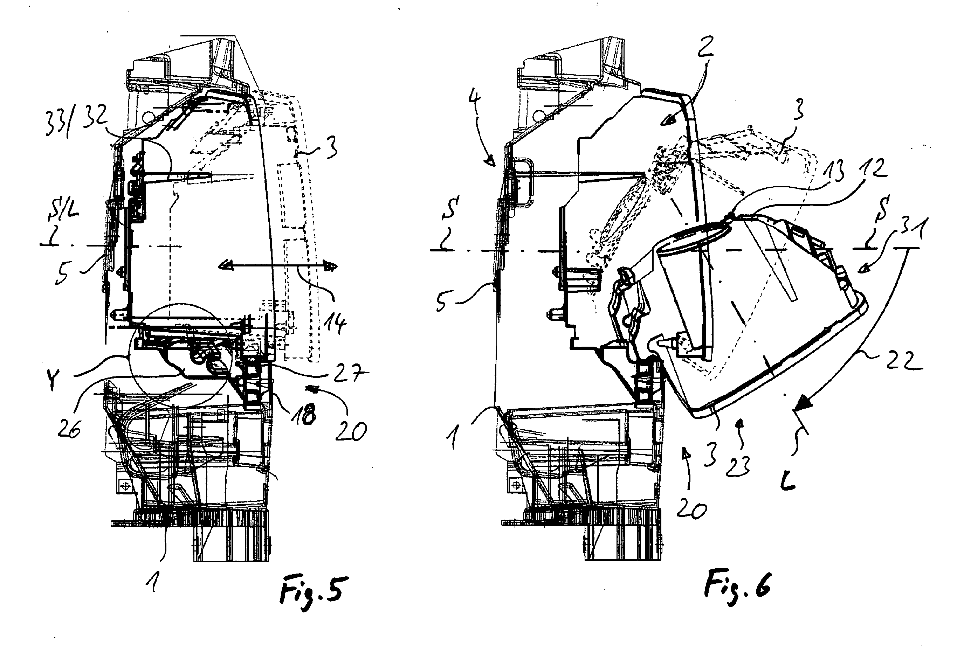

- Figur 5: eine Seitenansicht der Aufnahmeeinrichtung mit einer Leuchteinheit in einer der Einschubstellung nahen Lage,
- Figur 6: eine Seitenansicht der Aufnahmeeinrichtung mit einer Leuchteinheit in einer Einschubstellung und in einer Kippstellung,
- Figur 7a: eine Detailansicht Y in Figur 5 einer Kippeinheit der Befestigungsvorrichtung in einer Außereingriffstellung von Scharnierelementen der Leuchteinheit und der Aufnahmeeinrichtung,
- Figur 7b: eine Detailansicht Y in Figur 5 einer Kippeinheit der Befestigungsvorrichtung in einer Eingriffstellung von Scharnierelementen der Leuchteinheit und der Aufnahmeeinrichtung, und
- Figur 7c: ein schematischer Vertikalschnitt durch die Kippeinheit.

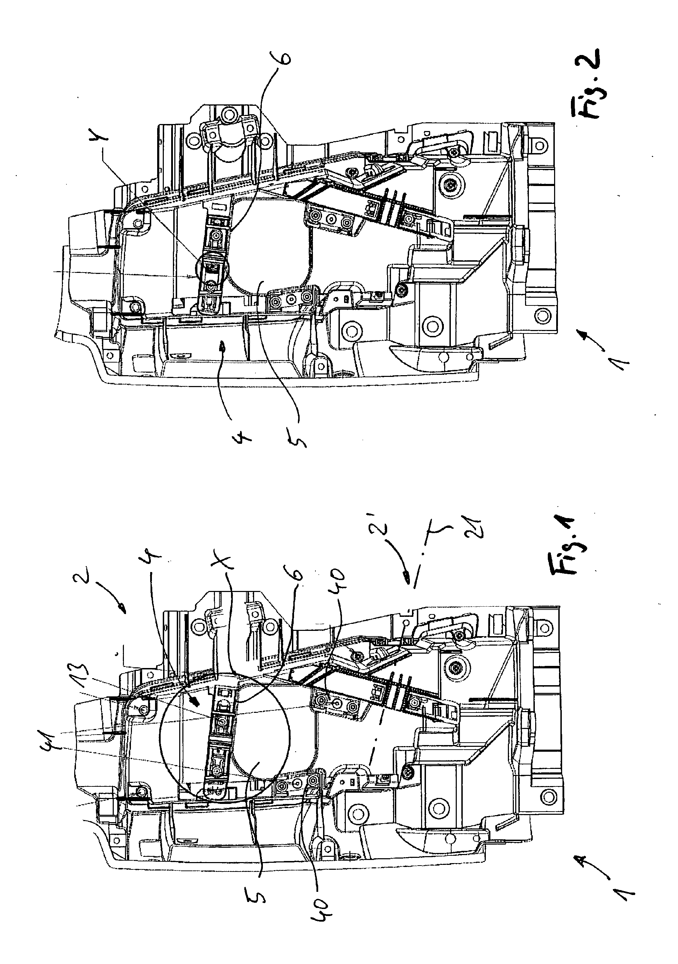

Eine Aufnahmeeinrichtung 1 kann als ein Frontendmodul ausgebildet sein, das über Montageträger an einer Karosserie des Kraftfahrzeuges befestigbar ist. Alternativ kann die Aufnahmeeinrichtung 1 auch Bestandteil der Karosserie des Fahrzeugs sein. Die Aufnahmeeinrichtung 1 weist eine Aufnahmemulde 2 zur lösbaren Befestigung einer Leuchteinheit 3 auf. Wie aus den Figuren 1 und 2 ersichtlich ist, weist die Aufnahmeeinrichtung 1 eine obere Aufnahmemulde 2 (Karosseriemulde) zur Aufnahme einer als Hauptscheinwerfer ausgebildeten Leuchteinheit 3 und eine untere Aufnahmemulde 2' zur Aufnahme einer als zusatzscheinwerfer ausgebildeten Leuchteinheit 3 auf. Im Folgenden wird ausschließlich auf die Befestigung der oberen Leuchteinheit 3 eingegangen.

Die erfindungsgemäße Befestigungsvorrichtung weist zum einen eine Schiebe-/Rasteinheit 4 auf, die an einer Rückseite 5 der Aufnahmeeinrichtung 1 angeordnet ist. Die Schiebe-/Rasteinheit 4 weist einen geradlinigen Schieber 6 auf, der in einem durch an der Rückseite 5 der Aufnahmeeinrichtung 1 angeformte Laschen 7 gebildeten Schlitz längsverschieblich gelagert ist. Der Schieber 6 ist entlang eines senkrecht zu einer Fahrzeuglängsachse verlaufenden Schiebeweges 8 linear beweglich angeordnet. Der Schieber 6 weist mindestens ein Langloch 9 sowie zwei längs des Schiebers 6 beabstandet zueinander angeordnete Klemmelemente 10 auf. Die Klemmelemente 10 sind als Federelemente ausgebildet, die über zwei Federarme 11 verfügen, die quer zur Erstreckung des Schiebers 6 federnd angeordnet sind. In der gemäß Figur 1 dargestellten Verriegelungsstellung des Schiebers 6 umgreifen die Federarme 11 rastend einen von einer Rückseite 12 der Leuchteinheit 3 abragenden Zapfen 13, so dass die Leuchteinheit 3 in der Aufnahmemulde 2 fixiert ist.

Durch Verschieben des Schiebers 6 entlang des Schiebeweges 8 in eine Entriegelungsstellung gemäß Figur 2 werden die Federarme 11 der Federelement 10 in Außereingriff mit dem Zapfen 13 gebracht, so dass die Leuchteinheit 3 entlang einer translatorischen Führungsbahn 14, die im Wesentlichen parallel zur Fahrzeuglängsachse verläuft, aus einer inneren Endstellung, in der die Leuchteinheit 3 mit ihren Zapfen 13 durch die Langlöcher 9 des Schiebers 6 greift, aus der Aufnahmemulde 2 herausgeschoben werden kann.

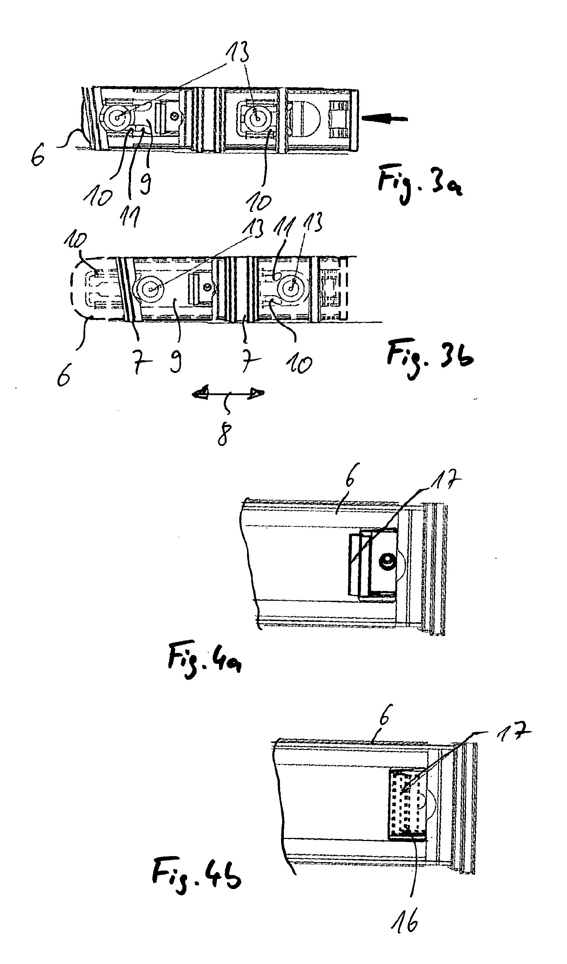

Wie aus den Figuren 4a und 4b ersichtlich ist, ist einer Querstrebe 16 des Schiebers 6 ein Festlegelement 17 der Aufnahmeeinrichtung 1 zugeordnet, so dass der Schieber 6 in der Entriegelungsstellung festlegbar ist. Hierdurch wird sichergestellt, dass beim Einschiebevorgang der Leuchteinheit 3 in die Aufnahmemulde 2 der Zapfen 13 ungehindert in das Langloch 9 eingreifen kann.

In dem Bereich eines Randes 18 der Aufnahmemulde 2 der Aufnahmeeinrichtung 1 bzw. einer Karosserieöffnung des Fahrzeugs ist eine Kippeinheit 20 vorgesehen, mittels derer die Leuchteinheit 3 nach Entriegeln unter Bewegung entlang der translatorischen Führungsbahn 14 um eine Schwenkachse 21 entlang einer rotatorischen Führungsbahn 22 in eine äußere Endstellung 23 bewegbar ist. In dieser äußeren Endstellung 23 ist die Leuchteinheit 3 geneigt an dem Rand 18 der Aufnahmeöffnung 19 gehalten, wobei die Rückseite 12 der Leuchteinheit 3 zugänglich ist zur Vornahme eines Leuchmittelwechsels.

Die Kippeinheit 20 bildet eine Scharniereinheit, wobei ein gabelförmiges Scharnierelement 24 der Leuchteinheit 3 ein zylinderförmiges Scharnierelement 25 der Aufnahmeeinrichtung 1 in der Scharnierstellung der Aufnahmeeinrichtung 1 umgreift. Die Längsachse des Scharnierelementes 25 bildet somit die Schwenkachse 21, die windschief oder senkrecht zu der translatorischen Führungsbahn 14 und senkrecht zur Fahrzeuglängsachse verläuft. In der inneren Endstellung der Leuchteinheit 3 ist das Scharnierelement 24 der Leuchteinheit 3 in einem Abstand F zu dem Scharnierelement 25 der Aufnahmeeinrichtung 1 angeordnet. Dieser Abstand F entspricht der Länge der translatorischen Führungsbahn 14. Alternativ kann das zylinderförmige Scharnierelement 25 auch an dem Fortsatz 26 der Leuchteinheit 3 und das gabelförmige Scharnierelement 24 an der Aufnahmeeinheit 1 angeformt sein.

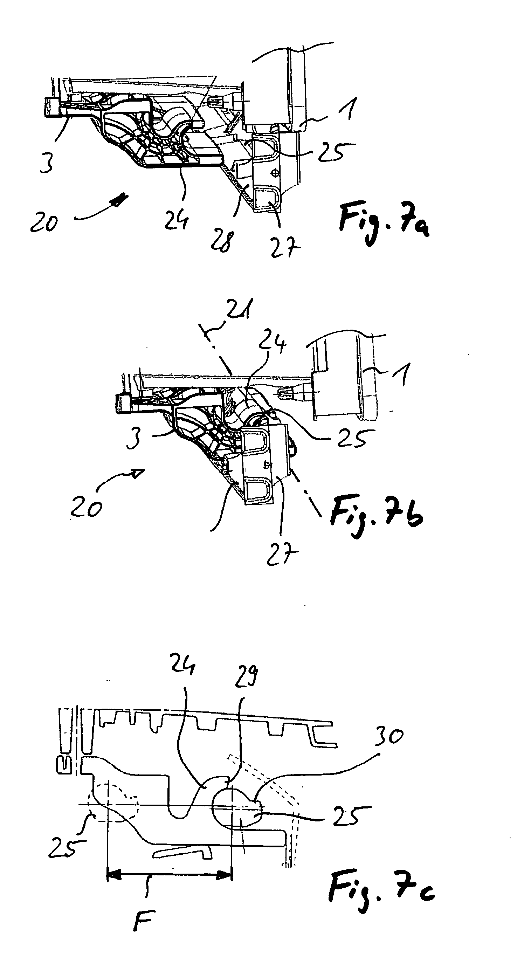

Wie besser aus den Figuren 7a bis 7c ersichtlich ist, erstreckt sich das Scharnierelement 24 der Leuchteinheit 3 am Ende eines Fortsatzes 26 der Leuchteinheit 3, der im Wesentlichen unterhalb von einem Gehäuse der Leuchteinheit 3 winklig von einer Unterseite abragt. Im vorliegenden Ausführungsbeispiel erstrecken sich von der Unterseite der Leuchteinheit 3 zwei Fortsätze 26, die quer zur translatorischen Führungsbahn 14 versetzt angeordnet sind. Die Scharnierelemente 25 der Aufnahmeeinrichtung 1 sind in einem an der Aufnahmeeinrichtung 1 befestigbaren Einsatzbauteil 27 integriert angeordnet. Das Einsatzbauteil 27 weist eine ebene Stützschwelle 28 auf, so dass die Enden des Fortsatzes 6 abgestützt sind. Das Scharnierelement 25 der Aufnahmeeinrichtung 1 ist derart geformt, dass die Leuchteinheit 3 um einen spitzen oder stumpfen Winkel entlang der rotatorischen Bewegungsbahn 22 verschwenkt werden kann, vorzugsweise 75°. In einer geneigten äußeren Endstellung der Leuchteinheit 3 stößt ein Ende eines Scharnierarms 29 an einer Anschlagfläche 30 des Scharniers 25 an. In dieser äußeren Endstellung 23 wird die Leuchteinheit 3 allein durch die Aufnahmeeinrichtung 1 getragen.

Zum Verbringen der Leuchteinheit 3 aus der inneren Endstellung in die äußere Endstellung 23, in der die Leuchteinheit 3 geneigt unter Zugänglichkeit der Rückseite 12 derselben angeordnet ist, wird zuerst der Schieber 6 aus der Verriegelungsstellung in eine Entriegelungsstellung verbracht. Die Leuchteinheit 3 kann nun aus der inneren Endstellung in eine Zwischenstellung 31 verbracht werden, wobei die Leuchteinheit 3 entlang einer translatorischen Führungsbahn 14 geführt wird. Zur geführten translatorischen Bewegung der Leuchteinheit 3 weist die Aufnahmeeinrichtung 1 an Seitenwänden langgestreckte Rippen 32 auf, an denen Nasen 33 der Leuchteinheit 3 entlanggleiten. Sobald das Scharnierelement 25 der Aufnahmeeinrichtung 1 von dem Scharnierelement 24 der Leuchteinheit 3 erfasst wird (Scharnierstellung), ist die translatorische Bewegung beendet und die Leuchteinheit 3 befindet sich in einer aufrechten zwischenstellung 31. Durch Aufwenden einer in Axialrichtung der Leuchteinheit 3 wirkenden Kraft wird die Leuchteinheit 3 nun um die Schwenkachse 21 soweit verschwenkt, bis sie die äußere Endstellung 23 erreicht hat. Durch Öffnen einer rückseitig der Leuchteinheit 3 angeordneten Kappe kann nun das Leuchtmittel gewechselt werden. Die Scharniereinheit ist derart stabil ausgebildet, dass die Leuchteinheit 3 in dem gekippten Zustand gehalten werden kann. Vorteilhaft kann hierdurch ein Leuchtmittelwechsel in einer angenehmen Höhe der Leuchteinheit 3 erfolgen. Es ist sichergestellt, dass die Leuchteinheit 3 nicht selbsttätig von der Aufnahmeeinrichtung 1 entfernt werden kann.

Nach dem Leuchtmittelwechsel wird die Leuchteinheit 3 aus der äußeren Endstellung 23 in die Zwischenstellung 31 zurückgeschwenkt und nachfolgend entlang der translatorischen Führungsbahn 14 in die innere Endstellung verbracht. Durch nachfolgendes Verriegeln des Schiebers 8 ist die Leuchteinheit 3 wieder in der Aufnahmemulde 2 fixiert. Vorzugsweise weist die Leuchteinheit 3 von dem Gehäuse derselben rückseitig abragende Stifte auf, die in korrespondierende Aufnahmen an der Rückseite 5 der Aufnahmeeinrichtung 1 eingreifen. Die Aufnahmen können als Lochungen oder Ausnehmungen ausgebildet sein, die eine definierte Relativlage der Leuchteinheit 3 zu der Aufnahmeeinrichtung 1 ermöglichen.

Zur Montage der Leuchteinheit 3 kann diese unter I-neingriffbringen der korrespondierenden Scharnierelemente 24 der Leuchteinheit 3 und der Scharnierelemente 25 der Aufnahmeeinrichtung 1 angesetzt werden. Die Leuchteinheit 3 weist somit eine definierte Einsetzposition zu der Aufnahmeeinrichtung 1 auf. Nachfolgend kann - wie beim Leuchtmittelwechsel - die Leuchteinheit 3 durch Verschwenken entlang der rotatorischen Führungsbahn 22 und nachfolgendem Verschieben entlang der translatorischen Führungsbahn in die innere Endstellung verbracht werden, in der durch Verriegelungsmittel die Verriegelung der Leuchteinheit 3 erfolgt.

Zur Erhöhung der Vibrationsfestigkeit der Leuchteinheit 3 in der inneren Endstellung derselben sind an der Rückseite 5 der Aufnahmeeinrichtung 1 mittels Verschraubung 41 zwei Befestigungslaschen 40 montiert. Die langgestreckten Befestigungslaschen 40 erstrecken sich im Wesentlichen in vertikaler Richtung bzw. in einem relativ kleinen spitzen Winkel zu einer vertikalen Ebene. Im vorliegenden Ausführungsbeispiel sind zwei Befestigungslaschen 40 vorgesehen, die in einem Abstand zueinander angeordnet sind.

## Patentansprüche

1. Befestigungsvorrichtung für eine Leuchteinheit (3) an einer Karosserieöffnung eines Fahrzeugs mit einer an der Karosserie des Fahrzeugs befestigbaren und eine Aufnahmemulde aufweisenden Aufnahmeeinrichtung (1), die Führungsmittel aufweist zur Führung der Leuchteinheit (3) entlang einer translatorischen Bewegungsbahn (14) zwischen einer sich innerhalb der Aufnahmemulde (2, 2') befindlichen inneren Endstellung und einer Zwischenstellung (31) derselben, mit Verriegelungsmitteln zum Verbringen der sich in der inneren Endstellung befindenden Leuchteinheit (3) aus einem Entriegelungszustand in einen Verriegelungszustand und vice versa, wobei die Aufnahmeeinrichtung (1) als Führungsmittel im Bereich eines Randes (18) der Aufnahmemulde (2) eine Kippeinheit (20) aufweist, so dass die Leuchteinheit (3) in einer äußeren Endstellung (23) unter Freilegung einer Rückseite derselben geneigt angeordnet ist, wobei die Kippeinheit (20) durch ein Scharnierelement (24) der Leuchteinheit (3) und ein Scharnierelement (25) der Aufnahmeeinrichtung (1) gebildet ist, die derart zusammenwirken, dass die Leuchteinheit (3) aus der Zwischenstellung (31), in der eine Längsachse (L) der Leuchteinheit (3) mit einer Längsachse (S) der Aufnahmemulde (2) zusammenfällt, entlang einer rotatorischen Bewegungsbahn (22) in die äußere Endstellung (23) verbracht wird, in der die Längsachse (L) der Leuchteinheit (3) einen spitzen Winkel zu der Längsachse (S) der Aufnahmemulde (2) bildet, **dadurch gekennzeichnet,**
- **dass** das Scharnierelement (24) der Leuchteinheit (3) endseitig an einem von einem Gehäuse der Leuchteinheit (3) abragenden Fortsatz (26) angeformt ist,
- **dass** das Scharnierelement (25) der Aufnahmeeinrichtung (1) in einem an der Aufnahmeeinrichtung (1) befestigbaren Einsatzbauteil (27) integriert angeordnet ist,
- **dass** das Einsatzbauteil (27) eine ebene Stützschwelle (28) aufweist, so dass ein Ende des Fortsatzes (26) in der Zwischenstellung abgestützt ist.

2. Befestigungsvorrichtung nach Anspruch 1, **dadurch gekennzeichnet, dass** die Aufnahmeeinrichtung (1) als Führungsmittel im Bereich von Seitenwandungen Führungselemente (32) aufweist, die derart mit der Leuchteinheit (3) zusammenwirken, dass die Leuchteinheit (3) aus der inneren Endstellung entlang einer einzigen translatorischen Bewegungsbahn (14) in die Zwischenstellung (31) bewegbar ist.

3. Befestigungsvorrichtung nach Anspruch 1 oder 2, **dadurch gekennzeichnet, dass** die Kippeinheit (20) derart ausgebildet ist, dass die Leuchteinheit (3) in der äußeren Endstellung (23) geneigt gehaltert ist.

4. Befestigungsvorrichtung nach einem der Ansprüche 1 bis 3 **dadurch gekennzeichnet, dass** das Scharnierelement (25) der Aufnahmeeinrichtung (1) unmittelbar an dem Rand (18) der Aufnahmemulde (2) angeordnet ist.

5. Befestigungsvorrichtung nach einem der Ansprüche 1 bis 4, **dadurch gekennzeichnet, dass** das Scharnierelement (24) der Leuchteinheit (3) komplementär zu dem Scharnierelement (25) der Aufnahmeeinrichtung (1) ausgebildet ist.

6. Befestigungsvorrichtung nach einem der Ansprüche 1 bis 5, **dadurch gekennzeichnet, dass** von einer Rückseite (12) des Gehäuses der Leuchteinheit (3) mindestens ein Zapfen (13) abragt, der im Verriegelungszustand der Leuchteinheit (3) klemmend mit einem an einer Rückseite (5) der Aufnahmeeinrichtung (1) angeordneten Klemmelement (10) verbunden ist, wobei das Klemmelement (10) mittels eines Schiebers (6) senkrecht zur translatorischen Bewegungsbahn (14) zwischen einer den Zapfen (13) freigebenden Entriegelungsstellung und einer den Zapfen (13) klemmend haltenden Verriegelungsstellung verschiebbar ist.

7. Befestigungsvorrichtung nach einem der Ansprüche 1 bis 6, **dadurch gekennzeichnet, dass** das Klemmelement (10) an dem Schieber (6) angeformt ist und dass der Schieber (6) mit einem Festlegelement (17) derart zusammenwirkt, dass das Klemmelement (10) in der Entriegelungsstellung klemmend fixierbar ist.

8. Befestigungsvorrichtung nach einem der Ansprüche 1 bis7, **dadurch gekennzeichnet, dass** das Klemmelement (10) als ein senkrecht zu einer Längsachse des Zapfens (13) wirkendes Federelement ausgebildet ist.

9. Befestigungsvorrichtung nach einem der Ansprüche 1 bis 8, **dadurch gekennzeichnet, dass** an der Rückseite (5) der Aufnahmeeinrichtung (1) mindestens eine Befestigungslasche (40) montiert ist, derart, dass die Vibrationsfestigkeit der Leuchteinheit (3) in der inneren Endstellung erhöht ist.

## Claims

1. A fixing device for a lighting unit (3) on a body recess of a vehicle having an accommodating device (1) which can be fixed to the body of the vehicle and having an accommodating recess, said accommodating device (1) having guiding means for guiding the lighting unit (3) along a translational motion path (14) between an inner end position located inside the accommodating recess (2, 2') and an intermediate position (31) of the same, with locking means for moving the lighting unit (3) which is located in the inner end position from an unlocking state into a locking state and vice versa, wherein the accommodating device (1) has a tilting unit (20) as the guiding means in the region of an edge (18) of the accommodating recess (2), so that the lighting unit (3) is arranged at an inclination in an outer end position (23), exposing a rear side of the same, wherein the tilting unit (20) is formed by a hinge element (24) of the lighting unit (3) and a hinge element (25) of the accommodating device (1) which interact such that the lighting unit (3) is moved from the intermediate position (31), in which a longitudinal axis (L) of the lighting unit (3) coincides with a longitudinal axis (S) of the accommodating recess (2), along a rotational motion path (22), into the outer end position (23), in which the longitudinal axis (L) of the lighting unit (3) forms an acute angle to the longitudinal axis (S) of the accommodating recess (2), **characterized in that**
• the hinge element (24) of the lighting unit (3) is integrally molded on the end side on an extension (26) protruding from a housing of the lighting unit (3),
• the hinge element (25) of the accommodating device (1) is arranged integrated in an insert component (27) which can be fixed to the accommodating device (1),
• the insert component (27) has a level support plate (28) so that one end of the extension (26) is supported in the intermediate position.

2. The fixing device according to Claim 1, **characterized in that** the accommodating device (1) has guide elements (32) as guiding means in the region of side walls, said guide elements (32) interacting with the lighting unit (3) such that the lighting unit (3) can be moved from the inner end position along a single translational motion path (14) into the intermediate position (31).

3. The fixing device according to Claim 1 or 2, **characterized in that** the tilting unit (20) is configured such that the lighting unit (3) is held at an inclination in the outer end position (23).

4. The fixing device according to any one of Claims 1 to 3, **characterized in that** the hinge element (25) of the accommodating device (1) is arranged directly on the edge (18) of the accommodating recess (2).

5. The fixing device according to any one of Claims 1 to 4, **characterized in that** the hinge element (24) of the lighting unit (3) is configured complementarily to the hinge element (25) of the accommodating device (1).

6. The fixing device according to any one of Claims 1 to 5, **characterized in that** at least one journal (13) protrudes from a rear side (12) of the housing of the lighting unit (3), which journal (13) is connected in a clamping manner with a clamping element (10) arranged on a rear side (5) of the accommodating device (1) in the locking state of the lighting unit (3), wherein the clamping element (10) can be moved by means of a slide (6) perpendicularly to the translational motion path (14) between an unlocking position exposing the journal (13) and a locking position which holds the journal (13) in a clamping manner.

7. The fixing device according to any one of Claims 1 to 6, **characterized in that** the clamping element (10) is integrally molded on the slide (6) and that the slide (6) interacts with a fixing element (17) such that the clamping element (10) can be fixed in a clamping manner in the unlocking position.

8. The fixing device according to any one of Claims 1 to 7, **characterized in that** the clamping element (10) is configured as a spring element which acts perpendicularly to a longitudinal axis of the journal (13).

9. The fixing device according to any one of Claims 1 to 8, **characterized in that** at least one fixing tongue (40) is mounted on the rear side (5) of the accommodating device (1) such that the vibration resistance of the lighting unit (3) is increased in the inner end position.

## Revendications

1. Dispositif de fixation pour fixer une unité d'éclairage (3) à une ouverture de la carrosserie d'un véhicule automobile, avec un dispositif de réception (1) qui, pouvant être fixé sur la carrosserie du véhicule automobile et présentant une cavité de réception, est doté de moyens de guidage pour conduire l'unité d'éclairage (3) le long d'une voie translatoire (14), entre une position finale, interne, qui est située à l'intérieur de la cavité de réception (2, 2') et une position intermédiaire (31) de celle-ci, avec des moyens de verrouillage pour faire passer l'unité d'éclairage (3), se trouvant en position finale interne, d'un état de déverrouillage à un état de verrouillage et vice versa, sachant que, dans la région d'un bord (18) de la cavité de réception (2), le dispositif de réception (1) présente, en tant que moyen de guidage, une unité de basculement (20), de sorte que, dans une position finale, extérieure (23), l'unité d'éclairage (3) soit inclinée, sa face arrière étant mise à découvert, sachant que l'unité de basculement (20) est formée par un élément de charnière (24) de l'unité d'éclairage (3) et un élément de charnière (25) du dispositif de réception (1), qui coopèrent l'un avec l'autre de telle manière que l'unité d'éclairage (3) passe, le long d'une voie rotatoire (22), de la position intermédiaire (31), dans laquelle un axe longitudinal (L) de l'unité d'éclairage (3) coïncide avec un axe longitudinal (S) de la cavité de réception (2), à la position finale, extérieure (23), dans laquelle l'axe longitudinal (L) de l'unité d'éclairage (3) forme un angle aigu avec l'axe longitudinal (S) de la cavité de réception (2),
**caractérisé en ce que**
- l'élément de charnière (24) de l'unité d'éclairage (3) est formé, à son extrémité, sur un appendice (26) en saillie d'un boîtier de l'unité d'éclairage (3),
- l'élément de charnière (25) du dispositif de réception (1) est intégré dans un insert (27) qui peut être fixé au dispositif de réception (1),
- que l'insert (27) présente un support plan (28) sur lequel une extrémité de l'appendice (26)'prend appui dans la position intermédiaire.

2. Dispositif de fixation selon la revendication 1, **caractérisé en ce que**, dans la région de parois latérales, le dispositif de réception (1) présente, en tant que moyens de guidage, des éléments de guidage (32), qui coopèrent avec l'unité d'éclairage (3) de telle manière que ladite unité d'éclairage (3) puisse être conduite long d'une seule voie translatoire (14), de la position finale, interne à la position intermédiaire (31).

3. Dispositif de fixation selon la revendication 1 ou 2, **caractérisé en ce que** l'unité de basculement (20) est configurée de telle manière que l'unité d'éclairage (3) soit maintenue inclinée dans la position finale extérieure (23).

4. Dispositif de fixation selon l'une des revendications 1 à 3 **caractérisé en ce que** l'élément de charnière (25) du dispositif de réception (1) est agencé directement sur le bord (18) de la cavité de réception (2).

5. Dispositif de fixation selon l'une des revendications 1 à 4, **caractérisé en ce que** l'élément de charnière (24) de l'unité d'éclairage (3) est conçue en complément de l'élément de charnière (25) du dispositif de réception (1).

6. Dispositif de fixation selon l'une des revendications 1 à 5, **caractérisé en ce qu'**au moins , partant de la face arrière (12) du boîtier de l'unité d'éclairage (3), au moins un boulon (13), qui, à l'état de verrouillage de l'unité d'éclairage (3), est relié, en position de serrage, à un élément de serrage (10) qui est disposé sur une face arrière (5) du dispositif de réception (1), sachant que l'élément de serrage (10) peut être déplacé, au moyen d'un coulisseau (6), perpendiculairement à la voie translatoire (14), entre une position de déverrouillage, qui libère le boulon (13), et une position de verrouillage, qui maintient ledit boulon (13) en position de serrage.

7. Dispositif de fixation selon l'une des revendications 1 à 6, **caractérisé en ce que** l'élément de serrage (10) est formé sur le coulisseau (6) et que le coulisseau (6) coopère avec un élément de fixation (17) de telle manière que l'élément de serrage (10) puisse être fixé à blocage en position de déverrouillage.

8. Dispositif de fixation selon l'une des revendications 1 à 7, **caractérisé en ce que** l'élément de serrage (10) est réalisé sous la forme d'un élément élastique, actif, perpendiculaire à un axe longitudinal du boulon (13).

9. Dispositif de fixation selon l'une des revendications 1 à 8, **caractérisé en ce que**, sur la face Arrière (5) du dispositif de réception (1), une patte de fixation (40) est montée de manière à accroître la résistance aux vibrations de l'unité d'éclairage (3), dans la position finale, intérieure.
